# EUROPEAN PATENT APPLICATION

(11) **EP 0 816 145 A2**
(43) Date of publication of application: **07.01.1998**
(21) Application number: 97304415.9
(22) Date of filing: 24.06.1997
(51) Int. Cl.: B60H 1/00

(54) **Automobile air conditioner**

(30) Priority: 25.06.1996 JP 184037/96
(71) Applicant: SANDEN CORPORATION, Isesaki-shi Gunma, 372 (JP)
(72) Inventor: Sakurai, Hirotaka, Isesaki-shi, Gunma 372 (JP)
(74) Representative: Jackson, Peter Arthur

(57) **Abstract**

In an automobile air conditioner in which an evaporator (21) is placed in a duct (20) extending along a predetermined axis for guiding air, the duct has left and right openings (37, 38) which are opened to face left and right side surfaces (25, 26) of the evaporator, respectively. A closing plate is attached as a selecting arrangement to close one of the left and the right openings. Another of the left and the right openings serves as an inlet port through which the air is supplied into the duct.

## Description

This invention relates to an automobile air conditioner for air-conditioning an automobile in the manner known in the art.

Recently, various automobiles have been manufactured and sold. The automobiles are classified into two types, namely, a right-hand-drive car and a left-hand-drive car.

Each automobile has an engine room. The automobile air conditioner of the type is installed in the engine room together with various components such as an engine and others. The engine room has a shape which is different between the right-hand-drive car and the left-hand-drive car. In addition, the components are differently arranged for the right-hand-drive car and the left-hand-drive car.

Under the circumstances, the automobile air conditioner must be designed in different manners and manufactured by the use of different molding dies for the right-hand-drive car and the left-hand-drive car even if they are of a same model. Therefore, two different molding dies are required to result in an increase in manufacturing cost of the molding dies. In addition, assembly of the automobile air conditioner is complicated to result in an increase in assembling cost.

It is therefore an object of this invention to provide an automobile air conditioner in which an airstream inlet port can be opened at a selected one of left and right positions.

It is another object of this invention to provide an automobile air conditioner of the type described, which can be mounted on either of a right-hand-drive car and a left-hand-drive car.

Other objects of this invention will be clear as the description proceeds.

According to this invention, there is provided an automobile air conditioner which comprises a duct extending along a predetermined axis for guiding air, the duct having a pair of openings opened at opposite sides of the predetermined axis, conditioning means placed in the duct for conditioning the air, and selecting means connected to the duct for selecting one of the openings as an inlet port through which the air is supplied into the duct.

In the accompanying drawings:
Fig. 1 is a schematic vertical sectional view of a conventional automobile air conditioner;
Fig. 2 is a schematic plan view of an automobile air conditioner according to a first embodiment of this invention for a left-hand-drive car;
Fig. 3 is a schematic vertical sectional view of the air conditioner illustrated in Fig. 2;
Fig. 4 is a schematic plan view of the automobile air conditioner for a right-hand-drive car; and
Fig. 5 is a schematic plan view of an automobile air conditioner according to a second embodiment of this invention.

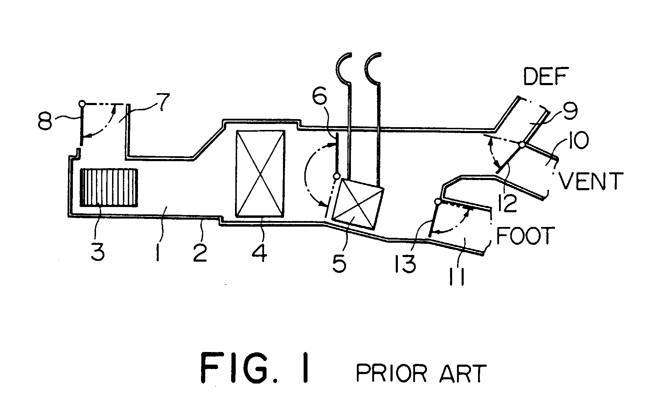

Referring to Fig. 1, description will at first be made as regards a conventional method for a better understanding of this invention.

The conventional automobile air conditioner comprises a duct 2 defining an airway 1. Within the airway 1, a blower 3, an evaporator 4, and a heater core 5 are arranged in this order from an upstream side (lefthand side in Fig. 1). An air-mixing damper 6 is disposed immediately upstream of the heater core 5. An air intake 7 is provided with an intake controlling damper 8 for controlling an intake ratio of internal and external air. At the intake ratio controlled by the intake controlling damper 8, the air is sucked by the blower 3 into the airway 1 as an airstream to be pneumatically delivered downstream.

Then, the airstream in the airway 1 passes through the evaporator 4. Thereafter, in dependence upon a setting position of the air-mixing damper 6, the airstream is brought into one of a through-the-core mode, a bypass mode, and a mixed mode. In the through-the-core mode, the airstream is made to pass through the heater core 5. In the bypass mode, the airstream is made to bypass the heater core 5. In the mixed mode, the airstream is partly made to pass through the heater core 5 and partly made to bypass the heater core 5. The airstream is then sent towards first through third airstream outlet ports 9, 10, and 11 (for example, DEF, VENT, and FOOT as labelled in the figure). Dampers 12 and 13 serve to control the airstream blowing out from the first through the third airstream outlet ports 9, 10, and 11.

Now, the description will be made about preferred embodiments of this invention with reference to the drawing.

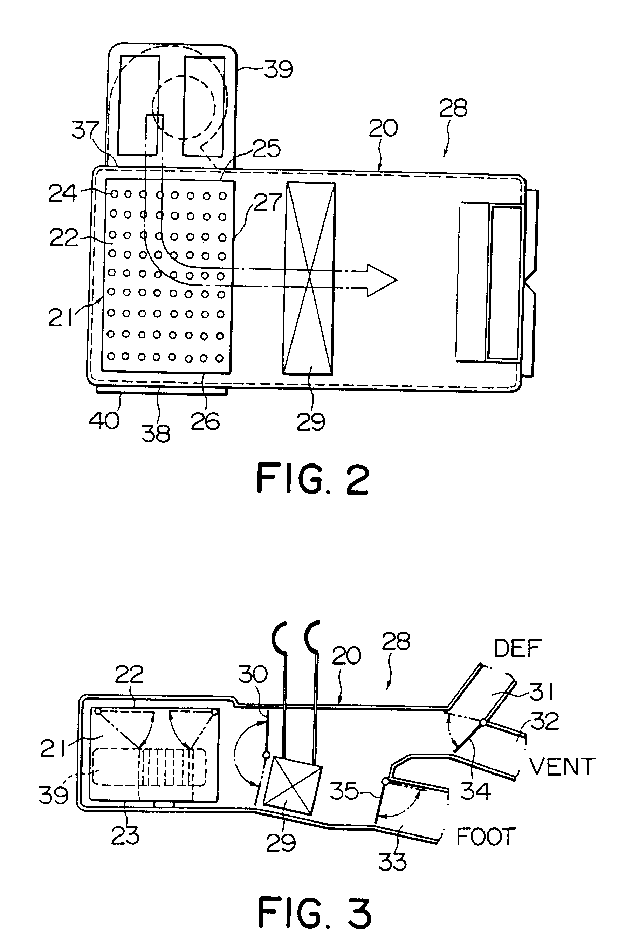

Referring to Figs. 2 and 3, an automobile air conditioner according to a first embodiment of this invention is designed for a left-hand-drive car known in the art. In the manner which will far later be described, the automobile air condition can be designed for a right-hand-drive car known in the art.

The automobile air conditioner of Figs. 2 and 3 comprises a duct or housing 20 and an evaporator 21 placed or contained in the duct 20. The evaporator 21 is implemented by a multitubular heat exchanger.

In the manner known in the art, the multitubular heat exchanger comprises an upper tank 22, a lower tank 23, and a large number of cylindrical tubes 24 arranged therebetween. The upper and the lower tanks 22 and 23 are opposite to each other in a vertical direction with a space left therebetween. Each of the cylindrical tubes 24 extends in the vertical direction and is connected to the upper and the lower tanks 22 and 23. Implemented by the multitubular heat exchanger, the evaporator 21 has a structure such that an airstream has a direction which is substantially free from any constraint between the upper and the lower tanks 22 and 23 and can be substantially freely changed therebetween.

The duct 20 extends along a predetermined axis substantially in a horizontal direction and is for guiding air to form the airstream. The duct 20 has left and right openings 37 and 38 which are opened at left and right sides of the predetermined axis to face left and right side surfaces 25 and 26 of the evaporator 21, respectively. Each of the left and right openings 37 and 38 has a central axis perpendicular to the predetermined axis. With this structure of the duct 20, an airstream inlet port can be selectively opened to face one of left and right side surfaces of the evaporator 21 with one of the left and right openings 37 and 38 being not closed. Therefore, it becomes possible to introduce the airstream between the upper and the lower tanks 22 of the evaporator 21 through the airstream inlet port.

After introduced into the evaporator 21 through the airstream inlet port, the airstream is changed its flowing direction to flow out through a rear surface 27 of the evaporator 21 substantially along the predetermined axis.

The automobile air conditioner further comprises a heater core 29 and an air-mixing damper 30 which are placed in the duct 20. The heater core 29 is disposed downstream of the evaporator 21 and is for heating the air in the duct. The air-mixing damper 30 is disposed immediately upstream of the heater core 29. In dependence upon a setting position of the air-mixing damper 30 in the manner known in the art, the airstream is brought into one of the through-the-core mode, the bypass mode, and the mixed mode that are described in conjunction with Fig. 1. In the through-the-core mode, the airstream is made to pass through the heater core 29. In the bypass mode, the airstream is made to bypass the heater core 29. In the mixed mode, the airstream is partly made to pass through the heater core 29 and partly made to bypass the heater core 29. A combination of the evaporator 21 and the heater core 29 is referred to as a conditioning arrangement for conditioning the air.

In addition, the duct 20 has airstream outlet ports 31, 32, and 33 (for example, DEF, VENT, and FOOT as labelled in the figure). The airstream blowing out from the airstream outlet ports 31, 32, and 33 is controlled by dampers 34 and 35 in the manner known in the art.

The duct 20, the evaporator 21, the heater core 29, and the others are unified to form a common unit 28. In the common unit 28, it should be noted that the duct 20 is provided with the left and right openings 37 and 38 formed at positions adjacent to the left and the right side surfaces 25 and 26 of the evaporator 21, one of which is selected to open the airstream inlet port.

In a design for the left-hand-drive car as illustrated in Figs. 2 and 3, a blower unit 39 is attached to the duct 20 at the left opening 37. The right opening 38 is closed by a closing plate 40.

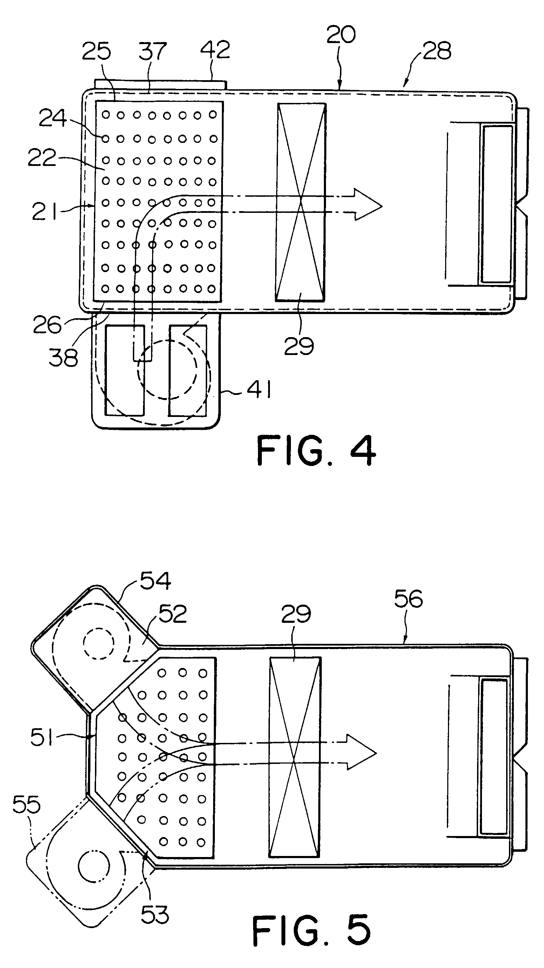

Referring to Fig. 4, the automobile air conditioner is designed for use in the right-hand-drive car. As illustrated in the figure, a blower unit 41 is attached to the duct 20 at the right opening 38. The left opening 37 is closed by a closing plate 42.

Each of the blower units 39 and 41 supplies the air to the duct 20 to cause the airstream in the duct 20 in the manner known in the art. The blower units 39 and 41 may be different in structure for the left-hand-drive car and the right-hand-drive car. Instead, a single blower unit can be used in common.

In a case where the right opening 38 is closed by a closing plate 40, the left opening 37 is selected to serve as the airstream inlet port. In another case where the left opening 37 is closed by a closing plate 42, the right opening 38 selected to serve as the airstream inlet port. Therefore, each of the closing plates 40 and 42 is referred to as a selecting arrangement for selecting, as the airstream inlet port, one of the left and right openings 37 and 38. It is a matter of course that a single closing plate can be used in common.

In the automobile air conditioner, the common unit 28 contains the evaporator 21 having the structure such that the airstream direction can be changed within the evaporator 21 and the airstream inlet port can be selectively opened at the left or the right side surface 25 and 26 of the evaporator 21 as a selected position. The blower unit 39 or 41 is attached to the airstream inlet port selectively opened at the selected position. As far as a car of a same model is concerned, the common unit 28 can be used for both of the right-hand-drive car and the left-hand-drive car. Thus, the common unit 28 of a single type is sufficient per each model. Therefore, the duct 20 of the common unit 28 can be manufactured by the use of the molding die of a single kind. Therefore, the manufacturing cost is considerably reduced.

The common unit 28 itself need not be changed in structure irrespective of whether it is mounted on the right-hand-drive car or the left-hand-drive car. Therefore, the manufacturing process is very simple. In addition, the common unit 28 adaptable for both of the right-hand-drive car and the left-hand-drive car can be handled as an integral unit assembly. Thus, management of parts is considerably facilitated.

The blower unit 39 or 41 is substantially directly attached to the airstream inlet port at the left or the right side surfaces 25 or 26 of the evaporator 21. Therefore, as compared with the arrangement in the conventional air conditioner illustrated in Fig. 1, the air conditioner can be considerably reduced in total length and entire size.

Following the reduction in entire size of the air conditioner, an available space can be widened particularly in an area around a navigator's seat to assure a sufficient space for mounting airbags and various electronic equipments.

If most of main components of the air conditioner are built in the common unit 28 as described above, the common unit 28 as a basic unit can be developed over different models of cars. In this manner, unification of the parts among the different models of cars will be achieved.

Referring to Fig. 5, the description will be directed to an automobile air conditioner according to a second embodiment of this invention. The automobile air conditioner comprises a multitubular evaporator 51 having a generally trapezoidal section and contained in a common unit 56. An airstream inlet port is selectively opened at one of left and right shoulder portions 52 and 53 of the evaporator 51 as a selected position. The airstream inlet port has a central axis slant to the predetermined axis. A blower unit 54 or 55 is attached to the airstream inlet port that is opened at the selected position.

Thus, it is possible for the multitubular evaporator 51 to have any desired sectional shape as far as such shape is adaptable in common to the right-hand-drive car and the left-hand-drive car. Therefore, the shape of the evaporator 51 and thus the shape of the common unit 56 can be freely designed in correspondence to a mounting space allocated to the air conditioner or a mounting space for installing other equipments. As a result, a space saving effect is remarkable.

Each of the above-mentioned automobile air conditioners comprises the common unit containing the evaporator of the structure such that the airstream inlet port can be selectively opened at the selected position leftward or rightward. Thus, the common unit of a single kind is adaptable for both of the right-hand-drive car and the left-hand-drive car. This results in considerable reduction in manufacturing cost, much simplification in manufacturing process, and facility in parts management.

By the use of the common unit, the air conditioner can be reduced in entire size so as to assure the space for other equipments. The multitubular evaporator of the structure such that the airstream direction can be changed within the evaporator body has a large degree of freedom in design. Thus, the degree of freedom is increased in designing the configuration of the common unit and thus the configuration of the entire air conditioner. The degree of freedom allows creation of an optimum design to meet various requirements, such as further miniaturization of the car. In addition, using the common unit as a basic unit, the main portion of the air conditioner can be unified not only between the left-hand-drive and the right-hand-drive cars of a single model but also over different models of cars.

While the present invention has thus far been described in connection with a few embodiments thereof, it will readily be possible for those skilled in the art to put this invention into practice in various other manners. For example, the heater core may comprise an electric heater which is widely used in the art.

## Claims

1. An automobile air conditioner comprising:
a duct extending along a predetermined axis for guiding air, said duct having a pair of openings opened at opposite sides of said predetermined axis;
conditioning means placed in said duct for conditioning said air; and
selecting means connected to said duct for selecting one of said openings as an inlet port through which said air is supplied into said duct.

2. An automobile air conditioner as claimed in claim 1, further comprising a blower unit attached to said inlet port for causing an airstream in said duct.

3. An automobile air conditioner as claimed in claim 2, wherein each of said openings is adjacent to said conditioning means, said conditioning means making said airstream be formed along said predetermined axis.

4. An automobile air conditioner as claimed in claim 3, wherein said conditioning means comprises a multitubular heat exchanger placed adjacent to said openings in said duct.

5. An automobile air conditioner as claimed in claim 4, wherein said conditioning means further comprises a heater core placed in said duct for heating the air.

6. An automobile air conditioner as claimed in claim 1, wherein said selecting means comprises a closing plate attached to said duct for closing another of said openings.

7. An automobile air conditioner as claimed in claim 1, wherein said inlet port has a central axis perpendicular to said predetermined axis.

8. An automobile air conditioner as claimed in claim 1, wherein said inlet port has a central axis slant to said predetermined axis.
